# EUROPEAN PATENT SPECIFICATION

(11) **EP 2 631 086 B1**
(45) Date of publication and mention of the grant of the patent: **30.07.2014**
(21) Application number: 13155984.1
(22) Date of filing: 20.02.2013
(51) Int. Cl.: B60B 27/00, B60B 27/06

(54) **Vehicle wheel mount assembly and associated wheel hub assembly**
Fahrzeugradmontageanordnung und zugehörige Radnabenanordnung
Ensemble de montage de roue de véhicule et ensemble de moyeu de roue associé

(30) Priority: 22.02.2012 IT TO20120157
(43) Date of publication of application: 28.08.2013
(73) Proprietor: Aktiebolaget SKF, 41550 Göteborg (SE)
(72) Inventor: Mahr, Reinhold, 97491 Aidhausen (DE); Bosco, Domenico, I-10071 Borgaro Torinese (TO) (IT)
(74) Representative: Tedeschini, Luca

(56) References cited:
- DE-C1- 4 038 917
- JP-A- 2006 151 067
- US-A1- 2007 147 719

## Description

### BACKGROUND OF THE INVENTION

The present invention relates to a vehicle wheel mount assembly and to an associated wheel hub assembly. Typically, the mount assembly forms part of a vehicle suspension or knuckle (for a steering wheel), which allows the connection of the wheel to the vehicle body and, in the case of driving wheels, the mechanical connection of the wheel to one of the axle shafts.

Wheel hub assemblies support a vehicle wheel on one side by means of a first flange, and if the wheel is a driving wheel, they are angularly connected on the opposite side to a corresponding constant velocity joint to transmit the driving torque from the axle shaft to the wheel itself. Wheel hub assemblies have a rotation axis A and comprise an inner ring and an outer ring which are coaxial to each other and to rotation axis A, and rotatable with respect to each other for interposition of two crowns of rolling bodies therebetween.

The inner ring is an integral piece with the first flange to allow a wheel to be secured to the assembly, and comprises a spindle extending along the rotation axis A, and possibly an insert ring mounted on the spindle axially at the side opposite to the first flange with respect to the spindle, axially locked on the spindle.

The outer ring, at the side opposite to the first flange, is an integral piece with a second flange equipped with a crown of bolts (usually three or four in number) to allow them to be fastened to an upright of the vehicle suspension or knuckle (in case of steering wheel mount), thus forming the mount assembly.

The above-described solution is more than satisfactory, but however has certain drawbacks. Firstly, the need to equip the second flange with a plurality of bolts forces a series of additional mechanical processes to be performed on the outer ring, which increase the cost of the wheel hub assembly; moreover, the presence of the second flange increases the weight of the wheel hub assembly. Secondly, fastening the second flange to the upright of the suspension or knuckle by means of bolts is relatively time-consuming and costly, as it requires orienting the wheel hub assembly to position the bolts in front of the respective holes made in the upright and then to perform a plurality of screwing operations. Finally, the need to make the fastening holes through the upright limits and restricts the conformation thereof, in particular when the upright is made of coined sheet metal.

A vehicle wheel mount assembly and a wheel hub assembly comprising the features of the preambles of claim 1 and 7 is known from JP-A-2006 15 1067.

### SUMMARY OF THE INVENTION

The object of the present invention is to provide a vehicle wheel mount assembly and an associated wheel hub assembly which are free from the drawbacks described, having low costs and being highly easy to be produced, highly easy and quick to be mounted, having a reduced bulk and weight, and increased reliability.

Therefore, according to the invention, a vehicle wheel mount assembly and an associated wheel hub assembly are provided as defined in the claims 1 and 7.

Thereby, a wheel mount assembly is obtained with a reduced axial bulk and a lighter weight due to the suppression of the second flange, which is replaced by a much smaller flange having the sole function of serving as an axial shoulder, and by a threaded section directly obtained on the outer surface of one end of the outer ring opposite to the first flange. Moreover, the shoulder flange is obtained on the outer ring substantially on the middle line thereof, not only with the advantage of decreasing the axial bulk but especially of allowing a better distribution of the stresses on the rolling bodies due to the fact that, in use, they are much closer to the vehicle upright or knuckle. Finally, mounting the wheel hub assembly to the upright is greatly facilitated and accelerated and may be easily automatically performed as there is no need to perform any mandatory orientation of the wheel hub assembly, which is circumferentially symmetrical. Moreover, the shoulder flange may be equipped with circumferential facets which allow it to be used as a grasping element to directly screw the wheel hub assembly onto the upright.

### BRIEF DESCRIPTION OF THE DRAWINGS

Further features and advantages of the present invention will become more apparent from the following description of a non-limiting embodiment thereof, provided with reference to the figures of the accompanying drawings, in which:
- figure 1 shows a longitudinal elevation view in radial section of the wheel mount assembly made according to the invention, which is diagrammatically shown in a partial exploded view, and of the corresponding associated wheel hub according to the invention ;
- figure 2 shows a front elevation view from direction B of the wheel hub assembly in figure 1; and
- figure 3 shows a radial section detail of the wheel mount assembly in figure 1, in enlarged scale, during the step of assembling.

### DETAILED DESCRIPTION OF PREFERRED EMBODIMENTS

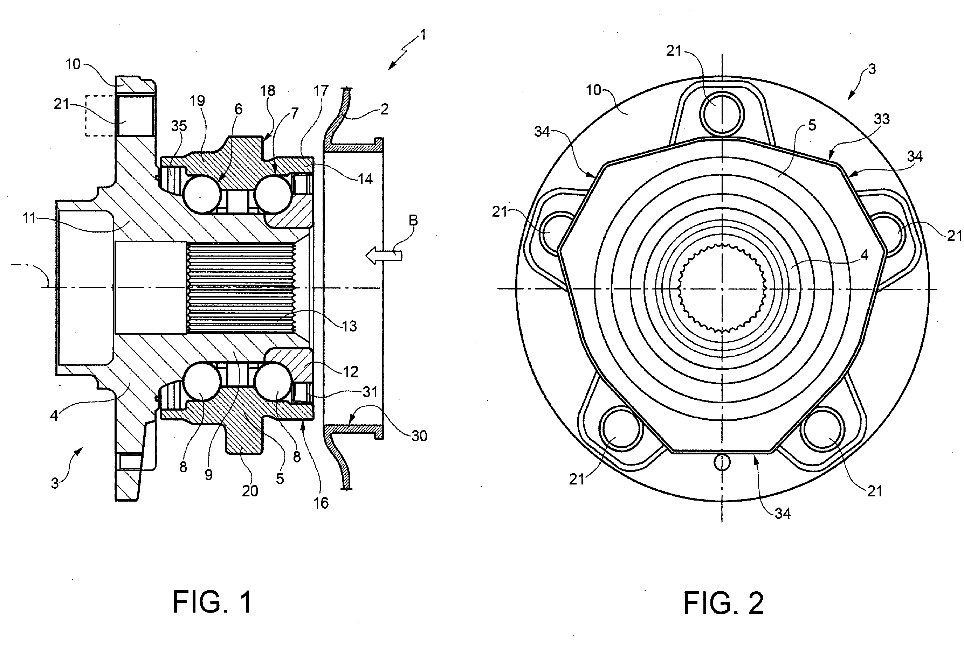

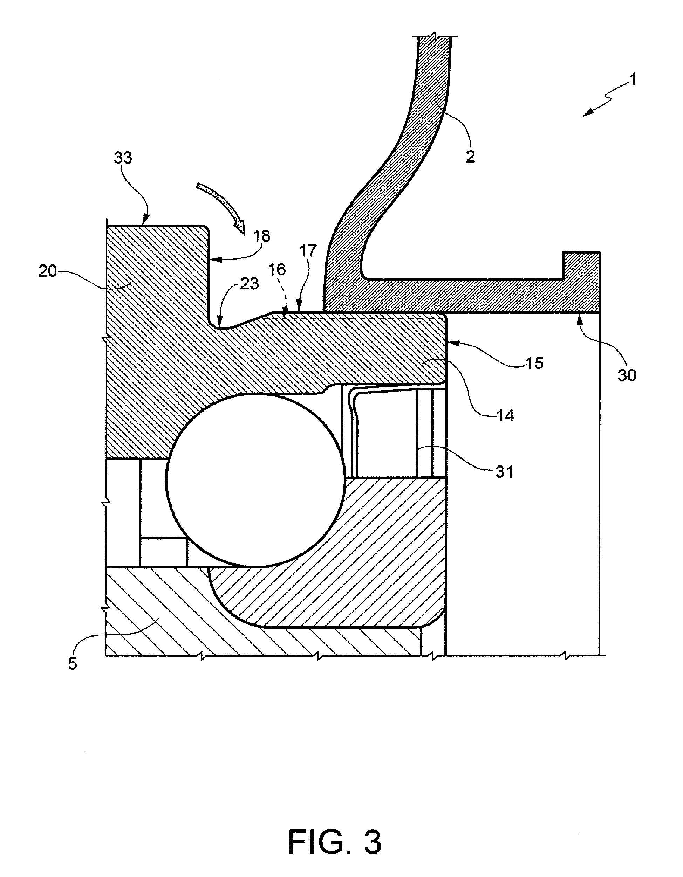

With reference to figures 1 and 3, number 1 (figure 1) indicates a vehicle wheel mount assembly as a whole, which vehicle wheel is known and not shown for simplicity.

Assembly 1 comprises a supporting element 2 associable with a vehicle, which is known and not shown for simplicity; in particular, supporting element 2 consists of an upright of a vehicle suspension or knuckle, which is also known and not shown for simplicity; moreover, assembly 1 comprises a wheel hub assembly 3, which has some variations according to the invention with respect to known wheel hub assemblies.

The wheel hub assembly 2, which is shown in front view from direction B (indicated by the arrow in figure 1) and in elevation view in figure 2, comprises an inner ring 4 and an outer ring 5 coaxially mounted and rotatable with respect to each other about a common symmetry axis, which is indicated by A, owing to the interposition of two crowns 6,7 of rolling bodies 8 therebetween.

Inner ring 4 comprises a spindle 9 extending along rotation axis A, a first flange 10 obtained in one piece with spindle 9 at a first end 11 of spindle 9, opposite to the supporting element 2 and facing to the opposite side of the outer ring 5 and, in the non-limiting example shown, an insert ring 12 mounted on the spindle 9 axially at the side opposite to flange 10 with respect to spindle 9, which ring 12 is axially locked on spindle 9 in any known manner, for example by rolling one end of spindle 9 opposite to end 11, or by means of a constant velocity joint of known type and not shown for simplicity, coupled so as to be angularly integral in use with the inner ring 4 by means of a spline joint 13. Flange 10 is adapted to receive, in use, a known vehicle wheel (not shown) which, in the case of a driving wheel, receives the torque through joint 13.

According to a first aspect of the invention, a first axial end 14 of the outer ring 5, which is facing the side opposite to flange 10 and which therefore is facing in use to supporting element 2, is delimited by a flat, annular front surface 15 and by an outer lateral surface 16, which is threaded along at least one axial section 17 thereof of predetermined length. Therefore, the traditional flange for the connection to the supporting element 2, which is similar in shape and size to flange 10, is missing on this end 14.

Instead, outer ring 5 is radially externally equipped with an axial shoulder 18 facing end 14; shoulder 18 is arranged, along the axial direction, between first end 14 and a second end 19 of the outer ring 5, opposite to end 14 and hence facing flange 10.

The axial shoulder 18 consists of a flat, annular front face facing the end 14 of a second flange 20, which is obtained in one piece with the outer ring 5 and has a substantially smaller radial size than flange 10. The term "substantially smaller" means that flange 20 radially extends in a cantilever fashion from the outer lateral surface of ring 5 over such an extension to substantially remain inside the circle defined by a crown of holes 21 made in flange 10 to receive the fastening bolts for the wheel which it receives in use. According to one aspect of the invention, an annular groove 23 (figure 3) is arranged between flange 20 and end 14, which is laterally externally obtained on the outer ring 5, substantially flush with the face of flange 20 defining shoulder 18.

In combination with the features described, the supporting element 2 comprises a seat 30 in which it receives, in use, the end 14 of the outer ring 5 and which is at least partially internally threaded to be coupled with the threaded section 17. As shown in figure 3, the outer ring 5 is in use directly screwed onto the supporting element 2, within seat 30, with shoulder 18 axially abutting on the supporting element 2.

In particular, seat 30 of the supporting element 2 which receives the end 14 of the outer ring 5 is a through seat; moreover, seat 30 and end 14 are threaded and reciprocally coupled by means of screwing substantially over the whole respective axial length thereof.

The axial length of the threaded section 17 is preferably made so as to be at least equal to, and preferably greater than, the axial length of a sealing assembly 31 inserted between the first end 14 of outer ring 5 and inner ring 4.

Flange 20 is delimited by a radially external edge 33 on which there is a plurality of circumferentially oriented flat faces 34 which make flange 20 usable as a grasping element to screw/unscrew end 14 into/out of the threaded seat 30.

In the example shown, the wheel hub assembly 3 comprises the sealing assembly 31, which is of the sliding seal type, and a second sliding sealing assembly 35, both inserted between the outer ring 5 and the inner ring 4, at the end 14 and end 19, respectively, of the outer ring 5. Furthermore, the second flange 20 is axially arranged on the middle line between the two crowns 6,7 of rolling bodies 8. Thereby, a perfect balance of the stresses involving the rolling bodies 8 is obtained.

## Claims

1. A vehicle wheel mount assembly (1) comprising a supporting element (2) associable with a vehicle, in particular consisting of an upright of a vehicle suspension or knuckle, and a wheel hub assembly (3) in turn comprising an inner ring (4) and an outer ring (5) which are coaxially mounted and rotatable with respect to each other about a common symmetry axis (A) by interposition of two crowns (6,7) of rolling bodies (8) therebetween; wherein the inner ring (4) comprises: a spindle (9) extending along the axis of rotation (A); a first flange (10) obtained in one piece with the spindle (9) at a first end (11) of the spindle opposite to the supporting element (2), the first flange (10) being adapted to receive, in use, a vehicle wheel; and, optionally, an insert ring (12) mounted on the spindle axially at the side opposite to the first flange (10) with respect to the spindle, which ring is axially locked on the spindle;
- the outer ring (5) is radially externally equipped with an axial shoulder (18) facing the first end (14) and arranged between the first end and a second end (19) of the outer ring, opposite to the first, the second end (19) facing the first flange (10); **characterized in that**,
- a first axial end (14) of the outer ring which is facing the side opposite the first flange, is delimited by an outer lateral surface (16) threaded along at least one axial section thereof (17) of predetermined length;
- the supporting element (2) comprises a seat (30) in which it receives the first end (14) of the outer ring and which is at least partially internally threaded to be coupled with the threaded section (17) of the first end of the outer ring;
- the outer ring (5) being directly screwed onto the supporting element (2), within the seat (30) of the supporting element, with the shoulder (18) axially abutting on the supporting element.

2. An assembly according to claim 1, **characterized in that** the seat (30) of the supporting element (2) which receives the first end of the outer ring is a through seat.

3. An assembly according to claim 1 or 2, **characterized in that** the seat (30) of the supporting element and the first end (14) of the outer ring are threaded and reciprocally coupled by means of screwing substantially over the whole respective axial length thereof.

4. An assembly according to one of the preceding claims, **characterized in that** the axial shoulder (18) of the outer ring consists of a face facing the first end (14) of a second flange (20), which is obtained in one piece with the outer ring (5) and has a substantially smaller radial size than the first flange (10).

5. An assembly according to claim 4, **characterized in that** an annular groove (23) is arranged between the second flange (20) and the first end (14) of the outer ring, which groove is laterally externally obtained on the outer ring, substantially flush with the face of the second flange (20) facing the first end.

6. An assembly according to one of the preceding claims, **characterized in that** the axial length of the threaded section (17) of the outer surface of the first end is at least equal to, and preferably greater than, the axial length of a sealing assembly (31) inserted between the first end (14) of the outer ring and the inner ring (4).

7. A vehicle wheel hub assembly (3) comprising an inner ring (4) and an outer ring (5) which are coaxially mounted and rotatable with respect to each other about a common symmetry axis (A) by interposition of two crowns (6,7) of rolling bodies (8) therebetween; wherein the inner ring comprises: a spindle (9) extending along the axis of rotation; a first flange (10) obtained in one piece with the spindle (9) and at a first end of the spindle, the first flange being adapted to receive, in use, a vehicle wheel, and optionally an insert ring (12) mounted on the spindle axially at the side opposite the first flange with respect to the spindle, which ring is axially locked on the spindle;
- the outer ring (5) is radially externally equipped with an axial shoulder (18) facing the first end (14) and arranged between the first end and a second end (19) of the outer ring, opposite to the first, the second end (19) facing the first flange (10);
- the axial shoulder (18) of the outer ring consists of a face facing the first end (14) of a second flange (20), which is obtained in one piece with the outer ring (5) and has a substantially smaller radial size than the first flange (10); **characterized in that**,
- a first axial end (14) of the outer ring, which is opposite to the first end (11) of the spindle, is delimited by an outer lateral surface (16) threaded along at least one axial section thereof (17) of predetermined length.

8. A wheel hub assembly according to claim 7, **characterized in that** the second flange (20) is delimited by a radially external edge (33) on which there is a plurality of circumferentially oriented flat faces (34) which make the second flange usable as a grasping element to screw/unscrew the first end into/out of a threaded seat (30).

9. A wheel hub assembly according to claim 7 or 8, **characterized in that** an annular groove (23) is arranged between the second flange (20) and the first end (14) of the outer ring, which groove is laterally externally obtained on the outer ring, substantially flush with the face of the second flange (20) facing the first end.

10. A wheel hub assembly according to one of the claims from 7 to 9, **characterized in that** it comprises a first (31) and a second (35) sliding sealing assemblies inserted between the outer ring (5) and the inner ring (4), at the first (14) and second (19) ends of the outer ring; the axial length of the threaded section (17) of the outer surface of the first end being at least equal to, and preferably greater than, the axial length of the first sealing assembly (31), which is inserted between the first end (14) of the outer ring and the inner ring (4).

11. A wheel hub assembly according to one of the claims from 7 to 10, **characterized in that** the second flange (20) is axially arranged on the middle line between the two crowns (6,7) of rolling bodies (8).

## Patentansprüche

1. Fahrzeugradmontageanordnung (1), die ein Tragelement (2) aufweist, das mit einem Fahrzeug verbunden werden kann, das insbesondere aus einem Ständer einer Fahrzeugaufhängung oder einer Gelenkverbindung besteht, und eine Radnabenanordnung (3) die ihrerseits einen Innenring (4) und einen Außenring (5) aufweist, die koaxial montiert und in Bezug zueinander um eine gemeinsame Symmetrieachse (A) durch Einfügen von zwei Kränzen (6, 7) rollender Körper (8) dazwischen drehbar sind, wobei der Innenring (4) Folgendes aufweist: einen Achszapfen (9), der sich entlang der Rotationsachse (A) erstreckt, einen ersten Flansch (10), der in einem Teil mit dem Achszapfen (9) erzielt ist, an einem ersten Ende (11) des Achszapfens gegenüber dem Tragelement (2), wobei der erste Flansch (10) angepasst ist, um beim Gebrauch ein Fahrzeugrad aufzunehmen, und, optional einen Einsatzring (12), der auf den Achszapfen axial an der Seite gegenüber dem ersten Flansch (10) in Bezug auf den Achszapfen montiert ist, wobei der Ring axial auf dem Achszapfen verriegelt ist,
- wobei der Außenring (5) radial extern mit einer axialen Schulter (18) ausgestattet ist, die zu dem ersten Ende (14) zeigt und zwischen dem ersten Ende und einem zweiten Ende (19) des Außenrings eingerichtet ist, gegenüber dem ersten, wobei das zweite Ende (19) zu dem ersten Flansch (10) zeigt,
**dadurch gekennzeichnet, dass**
- ein erstes axiales Ende (14) des Außenrings, das zu der Fläche gegenüber dem ersten Flansch zeigt, durch eine äußere seitliche Oberfläche (16) abgegrenzt ist, die entlang mindestens eines axialen Abschnitts (17) davon mit vorbestimmter Länge ein Gewinde aufweist,
- wobei das Tragelement (2) einen Sitz (30) aufweist, in dem es das erste Ende (14) des Außenrings aufnimmt, und das mindestens teilweise innen ein Gewinde aufweist, um mit dem Gewindeabschnitt (17) des ersten Endes des Außenrings verbunden zu werden,
- wobei der Außenring (5) direkt auf das Tragelement (2) innerhalb des Sitzes (30) des Tragelements geschraubt ist, mit der Schulter (18), die axial an das Tragelement anschlägt.

2. Anordnung nach Anspruch 1, **dadurch gekennzeichnet, dass** der Sitz (30) des Tragelements (2), der das erste Ende des Außenrings aufnimmt, ein durchgehender Sitz ist.

3. Anordnung nach Anspruch 1 oder 2, **dadurch gekennzeichnet, dass** der Sitz (30) des Tragelements und das erste Ende (14) des Außenrings ein Gewinde haben und gegenseitig durch Schrauben im Wesentlichen über dessen gesamte jeweilige axiale Länge verbunden sind.

4. Anordnung nach einem der vorhergehenden Ansprüche, **dadurch gekennzeichnet, dass** die axiale Schulter (18) des Außenrings aus einer Fläche besteht, die zu dem ersten Ende (14) eines zweiten Flanschs (20) zeigt, der in einem Teil mit dem Außenring (5) erzielt ist und eine im Wesentlichen kleinere radiale Größe hat als der erste Flansch (10).

5. Anordnung nach Anspruch 4, **dadurch gekennzeichnet, dass** eine ringförmige Hohlkehle (23) zwischen dem zweiten Flansch (20) und dem ersten Ende (14) des Außenrings eingerichtet ist, wobei die Hohlkehle seitlich extern auf dem Außenring erzielt ist, im Wesentlichen bündig mit der Fläche des zweiten Flanschs (20), der zu dem ersten Ende zeigt.

6. Anordnung nach einem der vorhergehenden Ansprüche, **dadurch gekennzeichnet, dass** die axiale Länge des Gewindeabschnitts (17) der Außenoberfläche des ersten Endes mindestens gleich und vorzugsweise größer ist als die axiale Länge einer Abdichteinheit (31), die zwischen das erste Ende (14) des Außenrings und den Innenring (4) eingefügt ist.

7. Fahrzeugradnabenanordnung (3), die einen Innenring (4) und einen Außenring (5) aufweist, die koaxial montiert und in Bezug zueinander um eine gemeinsame Symmetrieachse (A) durch Einfügen von zwei Kränzen (6, 7) rollender Körper (8) dazwischen drehbar sind, wobei der Innenring Folgendes aufweist: einen Achszapfen (9), der sich entlang der Rotationsachse erstreckt, einen ersten Flansch (10), der in einem Teil mit dem Achszapfen (9) und an einem ersten Ende des Achszapfens erzielt ist, wobei der erste Flansch angepasst ist, um beim Gebrauch ein Fahrzeugrad aufzunehmen, und optional einen Einsatzring (12), der auf den Achszapfen axial an der Seite gegenüber dem ersten Flansch in Bezug auf den Achszapfen montiert ist, wobei der Ring axial auf dem Achszapfen verriegelt ist,
- wobei der Außenring (5) axial extern mit einer axialen Schulter (18) ausgestattet ist, die zu dem ersten Ende (14) zeigt und zwischen dem ersten Ende und einem zweiten Ende (19) des Außenrings eingerichtet ist, gegenüber dem ersten, wobei das zweite Ende (19) zu dem ersten Flansch (10) zeigt,
- wobei die axiale Schulter (18) des Außenrings aus einer Fläche besteht, die zu dem ersten Ende (14) eines zweiten Flanschs (20) zeigt, der in einem Teil mit dem Außenring (5) erzielt ist und eine im Wesentlichen kleinere radiale Größe hat als der erste Flansch (10),
**dadurch gekennzeichnet, dass**
- ein erstes axiales Ende (14) des Außenrings, das dem ersten Ende (11) des Achszapfens gegenüber liegt, von einer äußeren seitlichen Oberfläche (16) abgegrenzt ist, die entlang mindestens eines axialen Abschnitts (17) davon mit vorbestimmter Länge ein Gewinde aufweist.

8. Radnabenanordnung nach Anspruch 7, **dadurch gekennzeichnet, dass** der zweite Flansch (20) durch eine radial äußere Kante (33) abgegrenzt ist, auf der sich eine Vielzahl umfänglich ausgerichteter ebener Flächen (34) befindet, die den zweiten Flansch als ein Greifelement zum Anschrauben/Abschrauben des ersten Endes in einen/aus einem Gewindesitz (30) verwendbar macht.

9. Radnabenanordnung nach Anspruch 7 oder 8, **dadurch gekennzeichnet, dass** eine ringförmige Hohlkehle (23) zwischen dem zweiten Flansch (20) und dem ersten Ende (14) des Außenrings eingerichtet ist, wobei die Hohlkehle seitlich extern auf dem Außenring erzielt ist, im Wesentlichen bündig mit der Fläche des zweiten Flanschs (20), der zu dem ersten Ende zeigt.

10. Radnabenanordnung nach einem der Ansprüche 7 bis 9, **dadurch gekennzeichnet, dass** sie eine erste (31) und eine zweite (35) Gleitdichtanordnung aufweist, die zwischen den Außenring (5) und den Innenring (4) an dem ersten (14) und zweiten (19) Ende des Außenrings eingefügt ist, wobei die axiale Länge des Gewindeabschnitts (17) der Außenoberfläche des ersten Endes mindestens gleich und vorzugsweise größer ist als die axiale Länge der ersten Abdichteinheit (31), die zwischen das erste Ende (14) und den Außenring und den Innenring (4) eingefügt ist.

11. Radnabenanordnung nach einem der Ansprüche 7 bis 10, **dadurch gekennzeichnet, dass** der zweite Flansch (20) axial auf der Mittenlinie zwischen zwei Kränzen (6, 7) rollender Körper (8) eingerichtet ist.

## Revendications

1. Ensemble de support de roue de véhicule (1) comprenant un élément de support (2) pouvant être associé à un véhicule, en particulier constitué d'un montant de suspension de véhicule ou d'un porte-fusée, et un ensemble de moyeu de roue (3) comprenant quant à lui une bague intérieure (4) et une bague extérieure (5) qui sont montées de manière coaxiale et peuvent tourner l'une par rapport à l'autre autour d'un axe de symétrie commun (A) grâce à l'interposition de deux couronnes (6, 7) de corps roulants (8) entre celles-ci ; la bague intérieure (4) comprenant : un arbre (9) s'étendant le long de l'axe de rotation (A) ; un premier flasque (10) réalisé d'un seul tenant avec l'arbre (9) au niveau d'une première extrémité (11) de l'arbre opposée à l'élément de support (2), le premier flasque (10) étant conçu pour recevoir, lors de l'utilisation, une roue de véhicule ; et, de manière facultative, une bague d'insertion (12) montée sur l'arbre au niveau du côté opposé, axialement, au premier flasque (10) par rapport à l'arbre, ladite bague étant axialement verrouillée sur l'arbre ;
- la bague extérieure (5) étant munie, sur le côté radialement extérieur, d'un épaulement axial (18) en regard de la première extrémité (14) et disposé entre la première extrémité et une seconde extrémité (19) de la bague extérieure, opposée à la première, la seconde extrémité (19) se trouvant en regard du premier flasque (10) ;
**caractérisé en ce que**,
- une première extrémité axiale (14) de la bague extérieure, qui se trouve en regard du côté opposé au premier flasque, est délimitée par une surface latérale extérieure (16) filetée le long d'au moins une section axiale de celle-ci (17) d'une longueur prédéterminée ;
- l'élément de support (2) comprend un siège (30) dans lequel est reçue la première extrémité (14) de la bague extérieure et qui est au moins en partie intérieurement fileté dans le but d'être couplé à la section filetée (17) de la première extrémité de la bague extérieure ;
- la bague extérieure (5) étant directement vissée sur l'élément de support (2), à l'intérieur du siège (30) de l'élément de support, l'épaulement (18) venant en appui axialement sur l'élément de support.

2. Ensemble selon la revendication 1, **caractérisé en ce que** le siège (30) de l'élément de support (2) qui reçoit la première extrémité de la bague extérieure est un siège débouchant.

3. Ensemble selon la revendication 1 ou 2, **caractérisé en ce que** le siège (30) de l'élément de support et la première extrémité (14) de la bague extérieure sont filetés et mutuellement couplés par vissage essentiellement sur la totalité de leurs longueurs axiales respectives.

4. Ensemble selon l'une des revendications précédentes, **caractérisé en ce que** l'épaulement axial (18) de la bague extérieure est constitué d'une face se trouvant en regard de la première extrémité (14) d'un second flasque (20), qui est réalisé d'un seul tenant avec la bague extérieure (5) et présente une taille radiale sensiblement inférieure à celle du premier flasque (10).

5. Ensemble selon la revendication 4, **caractérisé en ce qu'**une rainure annulaire (23) est disposée entre le second flasque (20) et la première extrémité (14) de la bague extérieure, ladite rainure étant réalisée latéralement à l'extérieur sur la bague extérieure, essentiellement de niveau avec la face du second flasque (20) en regard de la première extrémité.

6. Ensemble selon l'une des revendications précédentes, **caractérisé en ce que** la longueur axiale de la section filetée (17) de la surface extérieure de la première extrémité est au moins égale, et de préférence supérieure, à la longueur axiale d'un ensemble d'étanchéité (31) inséré entre la première extrémité (14) de la bague extérieure et la bague intérieure (4).

7. Ensemble de moyeu de roue de véhicule (3) comprenant une bague intérieure (4) et une bague extérieure (5) qui sont montées de manière coaxiale et peuvent tourner l'une par rapport à l'autre autour d'un axe de symétrie commun (A) grâce à l'interposition de deux couronnes (6, 7) de corps roulants (8) entre celles-ci ; la bague intérieure comprenant : un arbre (9) s'étendant le long de l'axe de rotation ; un premier flasque (10) réalisé d'un seul tenant avec l'arbre (9) et au niveau d'une première extrémité de l'arbre, le premier flasque étant conçu pour recevoir, lors de l'utilisation, une roue de véhicule, et, de manière facultative, une bague d'insertion (12) montée sur l'arbre au niveau du côté opposé, axialement, au premier flasque par rapport à l'arbre, ladite bague étant axialement verrouillée sur l'arbre ;
- la bague extérieure (5) étant munie, sur le côté radialement extérieur, d'un épaulement axial (18) en regard de la première extrémité (14) et disposé entre la première extrémité et une seconde extrémité (19) de la bague extérieure, opposée à la première, la seconde extrémité (19) se trouvant en regard du premier flasque (10) ;
- l'épaulement axial (18) de la bague extérieure étant constitué d'une face se trouvant en regard de la première extrémité (14) d'un second flasque (20), qui est réalisé d'un seul tenant avec la bague extérieure (5) et présente une taille radiale sensiblement inférieure à celle du premier flasque (10) ;
**caractérisé en ce que**,
- une première extrémité axiale (14) de la bague extérieure, qui est opposée à la première extrémité (11) de l'arbre, est délimitée par une surface latérale extérieure (16) filetée le long d'au moins une section axiale de celle-ci (17) d'une longueur prédéterminée.

8. Ensemble de moyeu de roue selon la revendication 7, **caractérisé en ce que** le second flasque (20) est délimité par un bord radialement externe (33) sur lequel se trouve une pluralité de faces planes (34) orientées de manière circonférentielle grâce auxquelles le second flasque peut être utilisé comme élément de préhension pour visser/dévisser la première extrémité dans/hors d'un siège fileté (30).

9. Ensemble de moyeu de roue selon la revendication 7 ou 8, **caractérisé en ce qu'**une rainure annulaire (23) est disposée entre le second flasque (20) et la première extrémité (14) de la bague extérieure, ladite rainure étant réalisée latéralement à l'extérieur sur la bague extérieure, essentiellement de niveau avec la face du second flasque (20) en regard de la première extrémité.

10. Ensemble de moyeu de roue selon l'une des revendications 7 à 9, **caractérisé en ce qu'**il comprend des premier (31) et second (35) ensembles d'étanchéité coulissants insérés entre la bague extérieure (5) et la bague intérieure (4), au niveau des première (14) et seconde (19) extrémités de la bague extérieure ; la longueur axiale de la section filetée (17) de la surface extérieure de la première extrémité étant au moins égale, et de préférence supérieure, à la longueur axiale du premier ensemble d'étanchéité (31), qui est inséré entre la première extrémité (14) de la bague extérieure et la bague intérieure (4).

11. Ensemble de moyeu de roue selon l'une des revendications 7 à 10, **caractérisé en ce que** le second flasque (20) est disposé axialement sur la ligne médiane entre les deux couronnes (6, 7) de corps roulants (8).
